# EUROPEAN PATENT APPLICATION

(11) **EP 2 592 879 A1**
(43) Date of publication of application: **15.05.2013**
(21) Application number: 11803076.6
(22) Date of filing: 29.03.2011
(51) Int. Cl.: H04W 52/18

(54) **MOBILE COMMUNICATION TERMINAL AND COMMUNICATION METHOD THEREOF**

(30) Priority: 09.07.2010 CN 201010228013
(71) Applicant: Huizhou TCL Mobile Communication Co., Ltd., Huizhou, Guangdong 516006 (CN)
(72) Inventor: ZHOU, Baozhong, Huizhou Guangdong 516006 (CN)
(74) Representative: Viering, Jentschura & Partner
(86) International application number: PCT/CN2011/072195
(87) International publication number: WO 2012/003722

(57) **Abstract**

The present disclosure relates to the technical field of communications, and discloses a mobile communication terminal and a communication method thereof. The communication method comprises the following steps of: A. receiving a dialing operation instruction inputted by a user; B. determining whether a network coverage signal is within a normal range; and C. if the network coverage signal is not within the normal range, then choosing an actual maximum usable power for communication according to the dialing operation instruction. According to the mobile communication terminal and the communication method thereof of the present disclosure, a new function of adjusting the actual maximum usable power (Pₘₐₓ) for communication is added, so the transmitting power of the mobile communication terminal can be set as different values in different scenarios to match the actual application requirements to the greatest extent. Particularly in special cases, the user may choose to have the mobile communication terminal operate at the maximum possible power for communication so that the user can use specific services (e.g., emergent calls) normally even in areas having poor network coverage conditions. Thereby, this can improve the communication success rate, and is convenient for the user.

## Description

### FIELD OF THE INVENTION

The present disclosure generally relates to the technical field of communications, and more particularly, to a mobile communication terminal and a communication method thereof.

### BACKGROUND OF THE INVENTION

Currently, mobile communication terminals (e.g., mobile phones) must all be subjected to calibration and testing procedures before being delivered. These procedures are intended to ensure good consistency among the mobile communication terminals that are produced in mass (i.e., to satisfy the design specifications). During the design phase of the terminals, a number of factors must be considered, for example, the conducting performance, the power consumption, the radiation performance, the specific absorption rate (SAR), or the electromagnetic compatibility (EMC) of the terminals and so on.

Some of these performance factors are in conflict with each other. For example, in terms of the radiation performance, a higher transmitting power will be more preferred; however, in terms of the SAR requirement, a lower transmitting power will be more preferred. Therefore, the final transmitting power that satisfies the design specifications will necessarily be a compromise between these different factors. For this reason, the maximum calibrated power (P_{cal}) is necessarily not the actual maximum usable power (Pₘₐₓ). That is to say, in the mass production, the maximum transmitting power of the mobile communication terminals is adjusted to a moderate value but not the maximum possible value.

This method may cause problems under some special conditions. For example, a problem may occur when a user needs to dial an emergency call (e.g., 112 or 110) under emergent conditions but the area where the user is located is poorly covered by the communication network (e.g., in a mountain forest, in the sea, or in a remote area). Because the conventional mobile phones all lack the function of adjusting the maximum possible transmitting power (Pₘₐₓ) available for communication but can only operate according to the transmitting power settings determined in the production line, the maximum transmitting power is not the actual maximum usable transmitting power. Consequently, it is likely that the user who is in an urgent need but is located in an area which is poorly covered by the communication network will fail to make a phone call because there is no communication signal, which is inconvenient for the user.

Accordingly, improvements and advancements still have to be made in the art.

### SUMMARY OF THE INVENTION

In view of the aforesaid shortcoming of the prior art, the technical problem to be solved by the present disclosure is to provide a mobile communication terminal and a communication method thereof. The mobile communication terminal is additionally provided with a new function of adjusting the actual maximum usable power (Pₘₐₓ) for communication, so the user can have the mobile communication terminal operate at the actual maximum usable power for communication in special cases (e.g., under emergent conditions). This can improve the communication success rate, and is convenient for the user.

To achieve the aforesaid objective, the present disclosure provides a communication method for a mobile communication terminal, which comprises the following steps of:
A. receiving a dialing operation instruction inputted by a user;
B. determining whether a network coverage signal is within a normal range; and
C. if the network coverage signal is not within the normal range, then choosing an actual maximum usable power for communication according to the dialing operation instruction.

Preferably, the communication method for a mobile communication terminal further comprises: C1. if the network coverage signal is within the normal range, then choosing a preset calibrated power that satisfies design specifications for normal communication according to the dialing operation instruction.

Preferably, the dialing operation instruction in the step A comprises: a telephone number that is newly inputted, or a telephone number that is chosen as needed from a telephone directory.

Preferably, the actual maximum usable power is a maximum usable power at which the mobile communication terminal can transmit.

Preferably, the actual maximum usable power is a sum of a preset offset value and the preset calibrated power that satisfies the design specifications.

Preferably, the step B further comprises: B1. displaying the network coverage signal.

The present disclosure further provides a mobile communication terminal, which comprises:
a receiving module, being configured to receive a dialing operation instruction inputted by a user;
a network coverage signal displaying module, being configured to determine and display whether a network coverage signal is within a normal range;
a normal communication module, being configured to choose for normal communication a preset calibrated power that satisfies design specifications according to the dialing operation instruction if the network coverage signal is within the normal range; and
a maximum usable power communication module, being configured to choose an actual maximum usable power for communication according to the dialing operation instruction if the network coverage signal is not within the normal range.

Preferably, the dialing operation instruction comprises: a telephone number that is newly inputted, or a telephone number that is chosen as needed from a telephone directory.

Preferably, the actual maximum usable power is a maximum usable power at which the mobile communication terminal can transmit.

Preferably, the actual maximum usable power is a sum of a preset offset value and the preset calibrated power that satisfies the design specifications.

According to the mobile communication terminal and the communication method thereof of the present disclosure, a new function of adjusting the actual maximum usable power (Pₘₐₓ) for communication is added, so the transmitting power of the mobile communication terminal can be set as different values in different scenarios to match the actual application requirements to the greatest extent. Particularly in special cases, the user may choose to have the mobile communication terminal operate at the maximum possible power for communication so that the user can use specific services (e.g., emergent calls) normally even in areas having poor network coverage conditions. Thereby, this can improve the communication success rate, and is convenient for the user.

### BRIEF DESCRIPTION OF THE DRAWINGS

To describe the technical solutions of embodiments of the present disclosure more clearly, the attached drawings necessary for description of the embodiments will be introduced briefly hereinbelow. Obviously, these attached drawings only illustrate some of the embodiments of the present disclosure, and those of ordinary skill in the art can further obtain other attached drawings according to these attached drawings without making inventive efforts. In the attached drawings:
FIG. 1 is a block diagram illustrating a typical radio frequency (RF) structure of a mobile communication terminal;
FIG. 2 is a diagram illustrating an arrangement for power calibration of the mobile terminal;
FIG. 3 is a flowchart diagram of a communication method for a mobile communication terminal according to an embodiment of the present disclosure; and
FIG. 4 is a block diagram illustrating a structure of a mobile communication terminal according to an embodiment of the present disclosure.

### DETAILED DESCRIPTION OF THE INVENTION

Hereinbelow, the present disclosure will be further described with reference to the attached drawings and embodiments thereof.

The present disclosure provides a mobile communication terminal and a communication method thereof. To make the objectives, technical solutions and advantages of the present disclosure clearer, the present disclosure will be further described hereinbelow with reference to the attached drawings and embodiments thereof. It shall be understood that, the embodiments described herein are only intended to illustrate but not to limit the present disclosure.

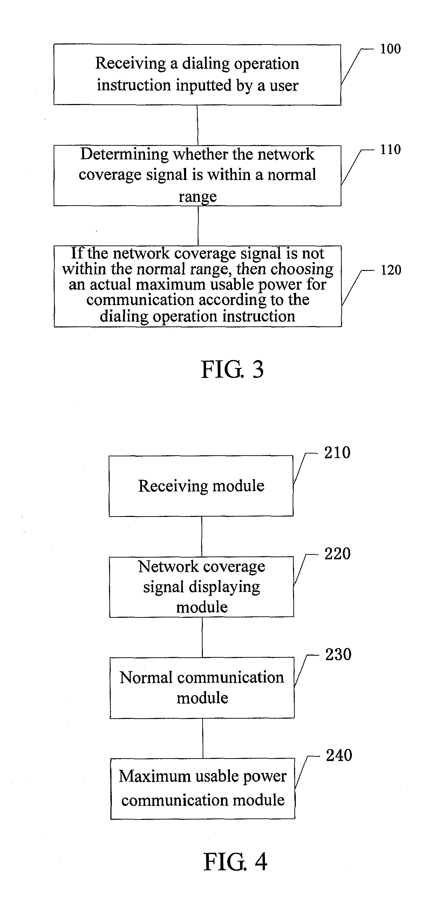

As shown in FIG. 3, a communication method for a mobile communication terminal according to the present disclosure comprises the following steps:
Step 100: receiving a dialing operation instruction inputted by a user. The dialing operation instruction comprises: a telephone number that is newly inputted, or a telephone number that is chosen as needed from a telephone directory.
Step 110: displaying a current network coverage signal of the mobile communication terminal, and determining whether the network coverage signal is within a normal range; and if the network coverage signal is within the normal range, then choosing a preset calibrated power that satisfies design specifications for normal communication according to the dialing operation instruction.
Step 120: if the network coverage signal is not within the normal range, then choosing an actual maximum usable power for communication according to the dialing operation instruction. The actual maximum usable power may be a maximum usable power at which the mobile communication terminal can transmit, and of course, may also be a sum of a preset offset value and the preset calibrated power that satisfies the design specifications.

Hereinbelow, the communication method for a mobile communication terminal according to the present disclosure will be further detailed.

A controllable power is required whether for 2G mobile communication terminals or for 3G mobile communication terminals. That is to say, both the 2G mobile communication terminals and the 3G mobile communication terminals are required to output different power levels. For example, the Class 4 GSM terminals operating within the Extended Global System for Mobile (EGSM) frequency band are required to achieve power control of 15 levels (i.e., the 5^{th} level to the 19^{th} level). The 5^{th} power level is the highest power level, and the 3Gpp (the 3G communication protocol) requires that the power outputted at this level by the mobile communication terminal shall be controlled to be within 33 ± 2dBm under common operating conditions.

During the design phase of the mobile communication terminal, the designer determines a target value of the highest power level, which is referred to as the maximum calibrated power (P_{cal}). For example, the designer may set the maximum calibrated power (P_{cal}) to be 32.5dBm for the aforesaid GSM terminal. This value is determined in consideration of various factors such as the conducting performance, the radiation performance, the power consumption and the SAR. However, actually, the actual maximum usable power (Pₘₐₓ) of the mobile communication terminal is greater than the maximum calibrated power (P_{cal}). This is because if the maximum calibrated power (P_{cal}) is set as the actual maximum usable power (Pₘₐₓ) under normal operating conditions (i.e., in cases where the network coverage signal is within the normal range), then such performances as the power consumption and the SAR will be degraded, which is unfavorable for the user.

However, if there is a need to make an emergent call in some special cases, for example, in an area having a poor network coverage signal (i.e., in areas where the network coverage signal is not within the normal range), then what is the most important is to ensure ongoing of the communication rather than other factors such as the power consumption. Therefore, in these cases, it is desirable to have the communication terminal operate at the actual maximum usable power Pₘₐₓ for communication.

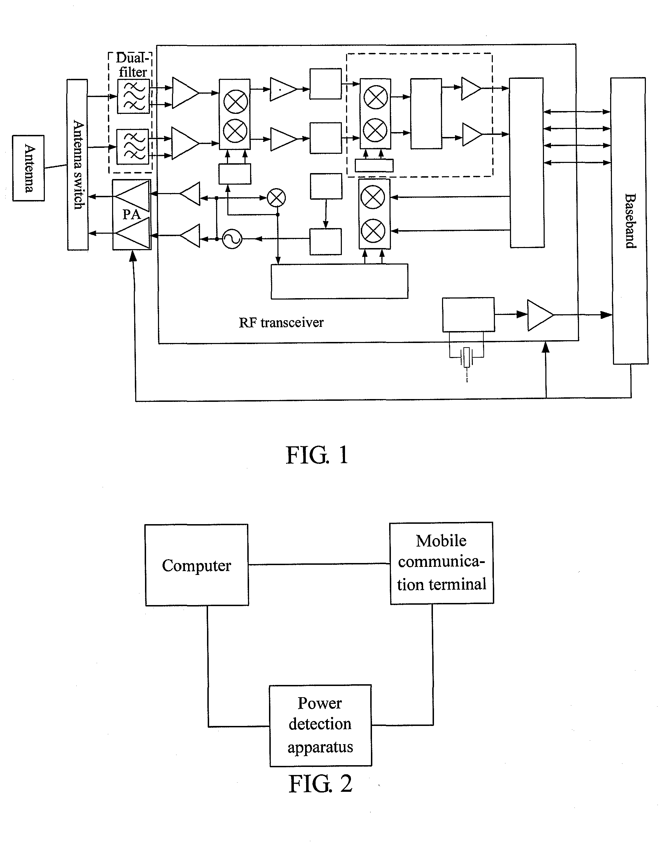

The transmitting power of the terminal is controlled by a baseband chip of the terminal, and control parameters are stored in a flash memory of the terminal. FIG. 1 illustrates a typical radio frequency (RF) structure of a communication terminal. Each time the terminal transmits, the baseband (BB) chip reads a calibration parameter from a corresponding address in the flash according to a desired power level so that an RF transceiver (i.e., a wireless transceiver) and a power amplifier (PA) can be controlled to transmit at a preset target power.

In order to make each mobile communication terminal transmit at a preset power for each power level when the network coverage signal is within the normal range, it is necessary to calibrate the mobile communication terminal before delivery, determine calibration parameters of the terminal at each power level and write these parameters into the flash memory.

Hereinbelow, the calibrating process of the mobile communication terminal before delivery will be explained by taking FIG. 2 as an example.

As shown in FIG. 2, the mobile communication terminal is connected to a computer via a universal asynchronous receiver transmitter (UART), and a power detection apparatus (e.g., Agilent8960, R&SCMU200) is connected to the computer via a GPIB interface. The mobile communication terminal and the power detection apparatus are connected with each other via an RF cable.

The preset calibrated power that satisfies the design specifications (i.e., the maximum power level P_{cal}) is calibrated as follows.

Step 1: the mobile communication terminal (e.g., a mobile phone) is powered on and connected with calibration software running in the computer.

Step 2: the calibration software instructs the mobile communication terminal to transmit a standard RF signal, with a transmitting power thereof being controlled by an initial calibration parameter Calcode.

Step 3: the power detection apparatus (e.g., Agilent8960, R&SCMU200) serving as a calibration instrument detects the RF signal, measures a magnitude of a power Pₘₑₐₛ, and reports the magnitude of the power Pₘₑₐₛ to the calibration software.

Step 4: the calibration software compares the power Pₘₑₐₛ with the power P_{cal}.

If the power Pₘₑₐₛ is higher than the power P_{cal} by a value within a certain range (which is set by the designer, and is usually 0.2dB), then the calibration parameter Calcode is decreased and the step 2 and the step 3 are repeated.

Otherwise, if the power Pₘₑₐₛ is lower than the power P_{cal} by a value within a certain range (which is set by the designer, and is usually 0.2dB), then the calibration parameter Calcode is increased and the step 2 and the step 3 are repeated.

Step 5: if a difference between the power Pₘₑₐₛ and the power P_{cal} is within a certain range, then the calibration parameter Calcode is written into the flash memory. Thus, the calibrating process is completed.

The calibrating processes for other power levels are similar to what described above except that the target power to be obtained through calibration shall be altered. Finally, a list is formed in the flash memory of the mobile communication terminal. As shown in Table 1, there is shown a typical calibration data list of preset calibrated powers that satisfy the design specifications within a GSM900 frequency band.

**Table 1**

| | PA Control Code |
|---|---|
| PCL5 | Code of PCL5, e.g., 758 |
| PCL6 | Code of PCL6, e.g., 719 |
| PCL7 | Code of PCL7, e.g., 543 |
| PCL8 | Code of PCL8, e.g., 471 |
| PCL9 | Code of PCL9, e.g., 405 |
| PCL10 | Code of PCL10, e.g., 348 |
| PCL11 | Code of PCL11, e.g., 298 |
| PCL12 | Code of PCL12, e.g., 252 |
| PCL13 | Code of PCL13, e.g., 212 |
| PCL14 | Code of PCL14, e.g., 178 |
| PCL15 | Code of PCL15, e.g., 147 |
| PCL16 | Code of PCL16, e.g., 122 |
| PCL17 | Code of PCL17, e.g., 98 |
| PCL18 | Code of PCL18, e.g., 79 |
| PCL19 | Code of PCL19, e.g., 56 |

The PA Control Code is a power amplifier control code, and the transmitting power levels are PCL5 to PCL19, with the PCL5 being the highest power level.

In the communication process of the mobile terminal, an RF driver chooses a corresponding PA control code from the list of the flash memory according to a transmitting power level required by a network. Then, the PA is driven according to the PA control code to obtain a corresponding power.

When the mobile terminal of the present disclosure is used, a new menu item will be additionally presented on a software interface. For example, the new menu item may be named "communicate at an actual maximum usable power". The menu is located in a communication interface of the terminal. When a conventional mobile communication terminal needs to make a call, the process is usually as follows:
first step: inputting a telephone number, or choosing a telephone number as needed from a telephone directory;
second step: choosing a call menu (usually a right key on a navigation keypad); and
third step: making a call by the mobile communication terminal.

However, when the mobile communication terminal of the present disclosure is used, a "communicate at an actual maximum usable power" menu will be added in the second step.

In communication of the mobile communication terminal of the present disclosure, if the network coverage signal is within the normal range, then the user will not choose the "communicate at an actual maximum usable power" menu and the mobile communication terminal will communicate in a normal way. That is, if the network coverage signal is within the normal range, then a preset calibrated power that satisfies the design specifications is chosen for normal communication according to the dialing operation instruction.

When the user starts to communicate under special scenario conditions (e.g., in a case where the network coverage signal is very poor), the user may choose the "communicate at an actual maximum usable power" menu for communication. That is, if the network coverage signal is not within the normal range, then an actual maximum usable power is chosen for communication according to the dialing operation instruction. In this case, the RF driver of the mobile communication terminal of the present disclosure will not invoke calibration data of the highest power level (e.g., "Code of PCL5" in Table 1) to control the power amplifier for purpose of transmission. Instead, the mobile communication terminal uses the maximum possible Code value (e.g., 1023) to drive the power amplifier for purpose of transmission. Thereby, the mobile communication terminal can communicate at the actual maximum usable power.

However, when some mobile communication terminals transmit at the actual maximum usable power (Pₘₐₓ), the power amplifier may enter into a supersaturation region to cause a vary poor quality of the transmitted signal. In this case, an offset value may be determined by the designer. When the user chooses the "communicate at an actual maximum usable power" menu, the RF driver will not invoke calibration data of the highest power level (e.g., "Code of PCL5" in Table 1) to control the power amplifier for purpose of transmission. Instead, the mobile communication terminal uses "Code + offset" to drive the power amplifier for purpose of transmission; i.e., the actual maximum usable power is a sum of the preset offset value and the preset calibrated power that satisfies the design specifications. In this case, the power value at which the terminal communicates is also greater than the maximum calibrated power P_{cal}.

As can be seen from the above descriptions, when the mobile communication terminal and the communication method thereof of the present disclosure are used, the user can use the mobile communication terminal to communicate at the maximum transmitting power in some special cases so as to ensure the communication success rate and the communication quality. This can effectively ensure communication for the user under emergent conditions. Also, this makes it more possible for the user located in an area where the signal is particularly poor to communicate normally, which is convenient for the user.

It shall be understood that, applications of the present disclosure are not limited to what described above. Those of ordinary skill in the art may make modifications or variations according to the above description, and all of these modifications and variations shall be covered within the scope of the attached claims of the present disclosure.

## Claims

1. A communication method for a mobile communication terminal, comprising the following steps of:
A. receiving a dialing operation instruction inputted by a user;
B. determining whether a network coverage signal is within a normal range; and
C. if the network coverage signal is not within the normal range, then choosing an actual maximum usable power for communication according to the dialing operation instruction.

2. The communication method for a mobile communication terminal of claim 1, further comprising:
C1. if the network coverage signal is within the normal range, then choosing a preset calibrated power that satisfies design specifications for normal communication according to the dialing operation instruction.

3. The communication method for a mobile communication terminal of claim 1, wherein the dialing operation instruction in the step A comprises: a telephone number that is newly inputted, or a telephone number that is chosen as needed from a telephone directory.

4. The communication method for a mobile communication terminal of claim 1, wherein the actual maximum usable power is a maximum usable power at which the mobile communication terminal can transmit.

5. The communication method for a mobile communication terminal of claim 1, wherein the actual maximum usable power is a sum of a preset offset value and the preset calibrated power that satisfies the design specifications.

6. The communication method for a mobile communication terminal of claim 1, wherein the step B further comprises:
B1. displaying the network coverage signal.

7. A mobile communication terminal, comprising:
a receiving module, being configured to receive a dialing operation instruction inputted by a user;
a network coverage signal displaying module, being configured to determine and display whether a network coverage signal is within a normal range;
a normal communication module, being configured to choose for normal communication a preset calibrated power that satisfies design specifications according to the dialing operation instruction if the network coverage signal is within the normal range; and
a maximum usable power communication module, being configured to choose an actual maximum usable power for communication according to the dialing operation instruction if the network coverage signal is not within the normal range.

8. The mobile communication terminal of claim 7, wherein the dialing operation instruction comprises: a telephone number that is newly inputted, or a telephone number that is chosen as needed from a telephone directory.

9. The mobile communication terminal of claim 7, wherein the actual maximum usable power is a maximum usable power at which the mobile communication terminal can transmit.

10. The mobile communication terminal of claim 7, wherein the actual maximum usable power is a sum of a preset offset value and the preset calibrated power that satisfies the design specifications.
